# EUROPEAN PATENT APPLICATION

(11) **EP 4 336 243 A1**
(43) Date of publication of application: **13.03.2024**
(21) Application number: 22194774.0
(22) Date of filing: 09.09.2022
(51) Int. Cl.: G02B 27/01

(54) **AN APPARATUS FOR PROJECTING IMAGES TOWARDS A USER**

(71) Applicant: Nokia Technologies Oy, 02610 Espoo (FI)
(72) Inventor: SALMIMAA, Marja Pauliina, 33610 Tampere (FI); JÄRVENPÄÄ, Toni Johan, 37800 Akaa (FI)
(74) Representative: Nokia EPO representatives

(57) **Abstract**

An apparatus comprising:
display means comprising an exit pupil expander comprising an outcoupling element configured to outcouple light in a forward direction towards a user and also in a backward direction away from the user;
a dynamically controllable reflector configured to provide selective reflection for light outcoupled from the exit pupil expander, wherein the selectivity of reflection of the light is dynamically controllable and wherein the selective reflection of the light is in a backwards direction back towards the user.

## Description

### TECHNOLOGICAL FIELD

Embodiments of the present disclosure relate to an apparatus such as a light guide display that can be used to project images towards a user.

### BACKGROUND

A light guide display can be used to project images towards a user. They are attractive because they can have a large exit pupil and therefore do not require exact positioning of a viewing user. However, a light guide display such as an exit pupil expander is often optimized for use in a narrow band of wavelengths of light.

Multiple light guides, each with a relatively narrow color gamut, can be used together to provide a fuller color gamut. However, this increases costs.

An exit pupil expander uses diffraction to project light forming an image towards a user. In at least some cases, the diffraction projects visible light in a forward direction towards the user but also in a backwards direction away from the user.

In some implementations, the backward projected light is recycled to the forward direction by reflection in a reflection surface. In some implementations, only the backward projected light is reflected towards the user, while the original forward projected light amount is minimized or directed away from the user.

Refractive and/or reflective optics may be used in some implementation to control the projection of light.

There are therefore multiple stages in the paths of visible light from a projector, through the light guide display system to the user. The different stages and the different paths can introduce uniformity issues where particular light along a particular path is effectively attenuated more than other light.

### BRIEF SUMMARY

According to various, but not necessarily all, examples there is provided an apparatus comprising:
display means comprising an exit pupil expander comprising an outcoupling element configured to outcouple light in a forward direction towards a user and also in a backward direction away from the user;
a dynamically controllable reflector configured to provide selective reflection for light outcoupled from the exit pupil expander, wherein the selectivity of reflection of the light is dynamically controllable and wherein the selective reflection of the light is in a backwards direction back towards the user.

In some but not necessarily all examples, the dynamically controllable reflector is configured to adjust a ratio of intensities of different colors present in light incident on the dynamically controllable reflector from the exit pupil expander to provide the selectively reflected light towards the user.

In some but not necessarily all examples, the apparatus is configured to adjust a color temperature or white point for the light provided by the dynamically controllable reflector to the user.

In some but not necessarily all examples, the selectivity of the dynamically controllable reflector is dependent upon output from one or more sensors of ambient illumination.

In some but not necessarily all examples, the dynamically controllable reflector is a color-controllable reflector configured to differentially reflect light, of different colors, outcoupled from the exit pupil expander in the backward direction back towards the user, wherein the color- controllable reflector is configured to reflect light of a first color more than light of a second color.

In some but not necessarily all examples, the dynamically controllable reflector comprises a reflective surface and a color filter.

In some but not necessarily all examples, the color filter is a tunable wavelength selective color filter.

In some but not necessarily all examples, the color filter is configured to adjust a duty cycle per color sequentially.

In some but not necessarily all examples, the color filter is configured to be spatially non-homogenous.

In some but not necessarily all examples, the exit pupil expander comprises:
an in-coupler diffraction element, an expander element, an out-coupler diffraction element and the dynamically controllable reflector is positioned adjacent the out-coupler diffraction element.

In some but not necessarily all examples, the apparatus is configured as an exit pupil expander (EPE) head up display, optionally a vehicle heads up display.

According to various, but not necessarily all, examples there is provided a computer program comprising computer program instructions that when loaded into at least one processor causes:
dynamically controlling selectivity of reflection by a reflector to selectively reflect light outcoupled from an exit pupil expander, the reflection reflecting light towards a user.

In some but not necessarily all examples, the computer program is configured to adjust a ratio of intensities of different colors present in light incident on the dynamically controllable reflector from the exit pupil expander to provide the selectively reflected light towards the user.

According to various, but not necessarily all, examples there is provided a method comprising:
dynamically controlling selectivity of reflection by a reflector to selectively reflect light outcoupled from an exit pupil expander, the reflection reflecting light towards a user.

In some but not necessarily all examples, the method comprises adjusting a ratio of intensities of different colors present in light incident on the dynamically controllable reflector from the exit pupil expander to provide selectively reflected light towards the user.

According to various, but not necessarily all, examples there is provided examples as claimed in the appended claims.

The color accuracy and balance can be optimized for the best user experience

The following portion of this 'Brief Summary' section, describes various features that may be features of any of the examples described in the foregoing portion of the 'Brief Summary' section. The description of a function should additionally be considered to also disclose any means suitable for performing that function

While the above examples of the disclosure and optional features are described separately, it is to be understood that their provision in all possible combinations and permutations is contained within the disclosure. It is to be understood that various examples of the disclosure can comprise any or all of the features described in respect of other examples of the disclosure, and vice versa. Also, it is to be appreciated that any one or more or all of the features, in any combination, may be implemented by/comprised in/performable by an apparatus, a method, and/or computer program instructions as desired, and as appropriate.

### BRIEF DESCRIPTION

Some examples will now be described with reference to the accompanying drawings in which:
FIG. 1 shows an example of the subject matter described herein;
FIG. 2 shows another example of the subject matter described herein;
FIG. 3A & FIG 3B show another example of the subject matter described herein;
FIG. 4 shows another example of the subject matter described herein;
FIG. 5 shows another example of the subject matter described herein;
FIG. 6 shows another example of the subject matter described herein;
FIG. 7 shows another example of the subject matter described herein;
FIG. 8 shows another example of the subject matter described herein;
FIG. 9 shows another example of the subject matter described herein;
FIG. 10 shows another example of the subject matter described herein;
FIG. 11 shows another example of the subject matter described herein.
FIG. 12 shows another example of the subject matter described herein;
FIG. 13 shows another example of the subject matter described herein.

The figures are not necessarily to scale. Certain features and views of the figures can be shown schematically or exaggerated in scale in the interest of clarity and conciseness. For example, the dimensions of some elements in the figures can be exaggerated relative to other elements to aid explication. Similar reference numerals are used in the figures to designate similar features. For clarity, all reference numerals are not necessarily displayed in all figures.

In the following description a class (or set) can be referenced using a reference number without a subscript index (e.g., 10) and a specific instance of the class (member of the set) can be referenced using the reference number with a numerical type subscript index (e.g., 10_1) and a non-specific instance of the class (member of the set) can be referenced using the reference number with a variable type subscript index (e.g., 10_i).

### DETAILED DESCRIPTION

The following FIGs illustrate examples of an apparatus 10 for projecting visible light 14, forming an image, towards a user 50.

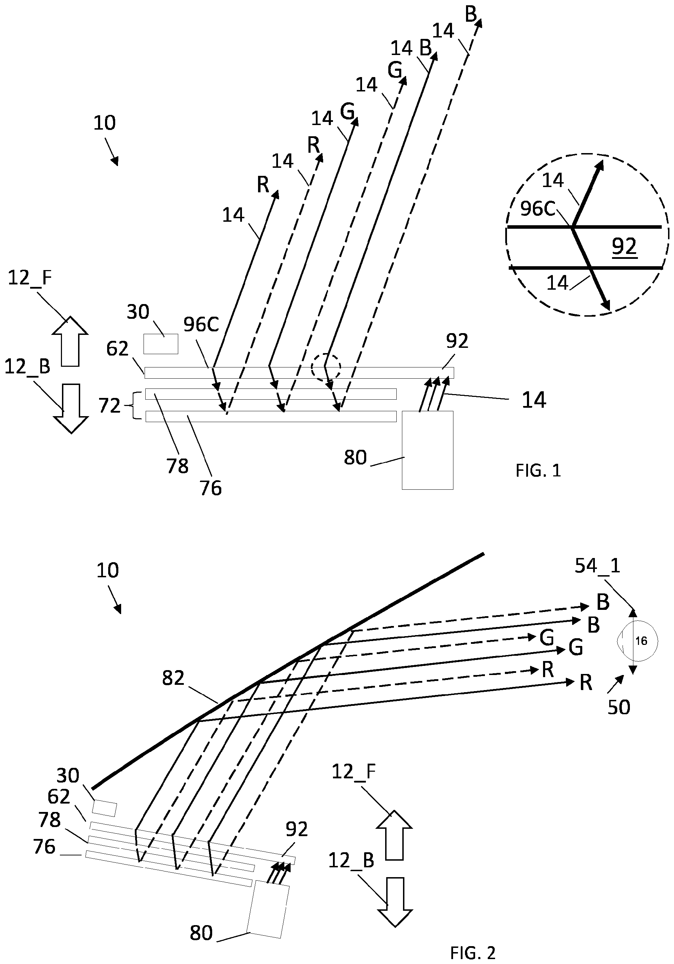

Referring to Figs 1 and 2, the apparatus 10 comprises a display means 62 and a dynamically controllable reflector 72.

The display means 62 comprises an exit pupil expander 92 comprising an outcoupling element 96C configured to outcouple visible light 14 in a forward direction 12_F towards a user 50 and also in a backward direction 12_B away from the user 50.

The dynamically controllable reflector 72 is configured to provide selective reflection for visible light 14 outcoupled from the exit pupil expander 92.

The reflection of the visible light is from a backwards direction 12_B away from the user to a forwards direction 12_F towards the user 50.

The selectivity of reflection of the visible light is dynamically controllable. Dynamically controllable means controllable during use, not fixed at manufacture.

The apparatus 10 therefore enables selective recycling of visible light 14. The recycled visible light 14 is indicated in FIGs 1 and 2 using dashed lines.

In these examples, a PGU 80 operates as a projector and projects an image into the light guide 90 using light 14. The image is seen by the user 50 (FIG 2, not illustrated in FIG 1)).

The dynamically controllable reflector 72 is configured to adjust light 14 incident on the dynamically controllable reflector 72 from the exit pupil expander 92 to provide the selectively reflected light 14 towards the user 50.

For example, in at least some examples, the dynamically controllable reflector 72 is a color-controllable reflector configured to differentially reflect light, of different colors, outcoupled from the exit pupil expander 92 in the backward direction 12_B back towards the user 50. The color-controllable reflector can, for example, be configured to reflect light of a first color more than light of a second color.

For example, in at least some examples, the dynamically controllable reflector 72 is configured to adjust a ratio of intensities of different colors present in light 14 incident on the dynamically controllable reflector 72. The white point (color temperature) of the light 14 that is reflected can be controlled to have a different white point (color temperature) than the incident light 14.

For example, in at least some examples, the dynamically controllable reflector 72 is configured to be selective per primary optical color (red, green, blue). For example, in at least some examples, the dynamically controllable reflector 72 is configured to independently attenuate incident red light to produce reflected red light and/or is configured to independently attenuate incident green light to produce reflected green light and/or is configured to independently attenuate incident blue light to produce reflected blue light.

As illustrated in FIGs 1 and 2, in at least some examples the dynamically controllable reflector 72 comprises a reflective surface 76 and a color filter 78. In at least some examples, the color filter 78 is a tunable wavelength selective color filter 78.

Examples of a tunable wavelength selective color filter 78 include, but are not limited to an electrically tunable filter, a birefringent tunable filter, a liquid crystal tunable filter, an electro-optical tunable filter.

An electronically tunable filter (TF) is an optical filter that is electronically controlled to transmit a selectable wavelength of light and exclude others (but not necessarily all others). These can, for example, be created by using dynamically controlled optical elements, for example liquid crystal or electro-optic cells; or by mechanically adjusting static optical elements, for example, rotating wave (phase) plates.

A birefringent tunable filter (BTF) is an electronically tunable filter that uses electronically controlled birefringent elements to transmit a selectable wavelength of light and exclude others (but not necessarily all others). These can, for example, be created by using dynamically controlled variable-birefringent optical elements, for example liquid crystal or electro-optic cells.

A liquid crystal tunable filter (LCTF) is a birefringent electronically tunable filter that uses electronically controlled liquid crystal (LC) elements to transmit a selectable wavelength of light and exclude others (but not necessarily all others). In some but not necessarily all examples, the liquid crystal tunable filter (LCTF) is a birefringent tunable filter (BTF).

An example of how birefringence is used to create an electronically tunable filter is described below.

Orthogonal linear polarization components of light experience a different refractive index and have a different phase velocity when they pass through a wave plate (birefringent plate). Therefore, the polarization state of light can be modified and this can be converted to attenuation in a subsequent polarizer. For certain wavelengths, the optical path length difference for the different polarizations is an integer multiple of the wavelength, and attenuation is small. The filter therefore selectively attenuates certain frequencies.

The non-attenuated frequencies can be electronically controlled by changing the phase relationship between the wave plates. This can be achieved by physical rotation of one wave plate relative to another or by changing the birefringent properties of a wave plate.

An electrically tunable birefringent element can be used as a wave plate to control birefringence. Examples include nematic liquid crystal or electro-optic cells. Some or all of the wave plates can be electrically tunable birefringent elements. Some or all of the wave plates can be fixed birefringent elements such as quarter wave plates.

Where a single wave plate is used, it determines the bandwidth and the free spectral range. Where wave plates are used in series, the first (thickest) wave plate determines the bandwidth and the last (thinnest) wave plate determines the free spectral range-the frequency gap between two successive optical intensity maxima.

An electro-optical tunable filter (EOTF) uses an electro-optic effect, which is a change in an optical property of a material in response to an applied electric field (that varies slowly compared with the frequency of light). The effect can, for example be a change of the absorption and/or a change of the refractive index/permittivity/birefringence. An electro-optic effect can, for example, be achieved using non-crystalline, solid electro-optical materials such as organic/plastic/polymer electro-optic material. At least some examples comprise nonlinear optical chromophores in a polymer lattice.

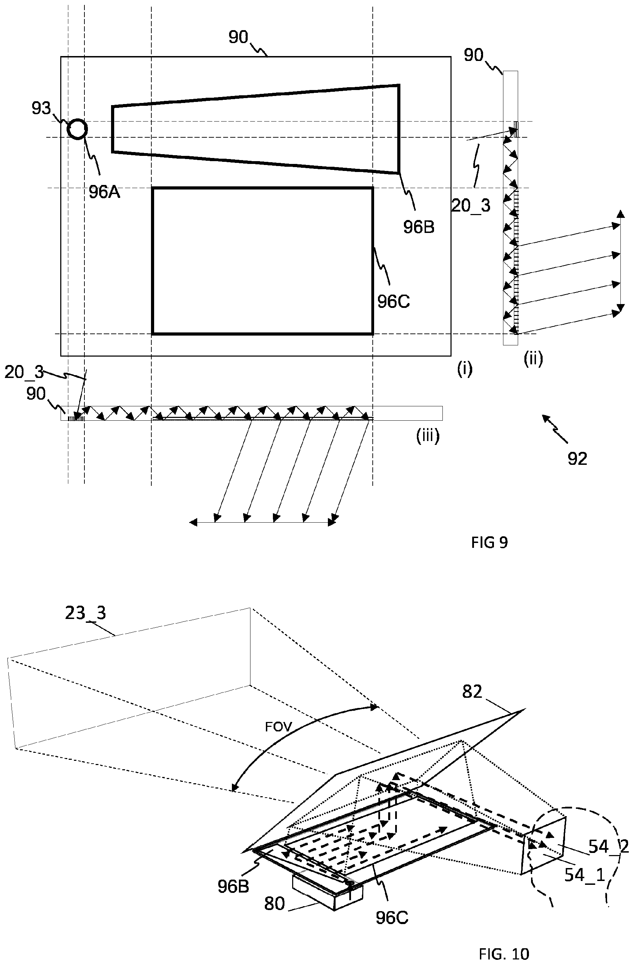

FIG 2 illustrates an example of an apparatus 10 from a side view. FIG 10 illustrates an example of that apparatus 10 from a perspective view.

In this example, but not necessarily all examples, the apparatus 10 comprises, in a stacked arrangement, the display means 62 and the dynamically controllable reflector 72. The display means 62 is located closer to the user 50.

Light 14 emitted from the display means 62 travels through the light guide 90 of the light guide display 62 and is directed forward 12_F towards the user 50 and backwards 12_B away from the user 50. The backward directed light 14 is selectively reflected by controllable reflector 72 and becomes recycled light 14 that is now directed in the forward direction 12_F.

The forward direction 12_F is a direction of a forward optical path to the user. The backward direction 12_B is a direction of a backward optical path to the controllable reflector 72, where is recycled reflected onto a forward optical path to the user. The terms forward and backwards should be interpreted accordingly.

The forward light 14 (solid lines in FIG 2) and the recycled light 14 (dashed lines in FIG 2) reflects from an optical director such as a windshield 82 (optional), and are directed towards the eyes 54_1, 54_2 of the user 50.

In some examples, the reflective surface 76 is not parallel with the light guide 90, and only the recycled light 14 is directed towards the eyes 54_1, 54_2 of the user 50. The forward light 14 reflects from an optical director to another direction, not towards the eyes 54_1, 54_2 of the user 50.

The distorting effect of a curved windshield can be compensated for by adapting the light gratings or on the light guide, or by using separate optical components with the light guide, or by using a curved reflective surface 76, or a combination of the above.

In at least some examples, the display means 62 is configured to sequentially display different colors, for example red (R), green (G), blue (B) in accordance with a display duty cycle.

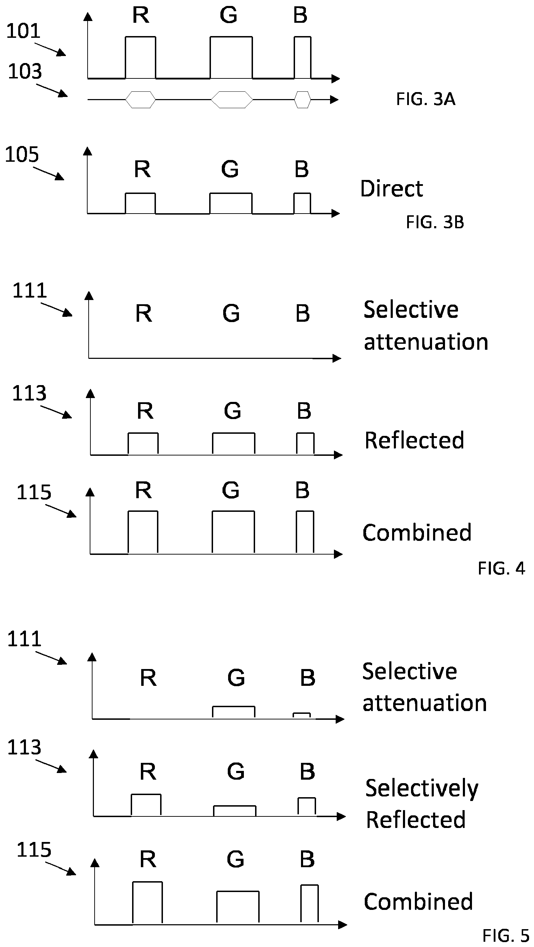

FIG 3 illustrates an example of a display duty cycle 101 for visible light 14. The visible light 14 is protected forwards 12_F towards the user 50. It can be assumed that the visible light 14 projected backwards 12_B away from the user 50 towards the selective reflector 72 has a similar duty cycle.

The light 14 is frequency or time multiplexed into distinct time divided periods. There is a sequential display of different colors: red (R), green (G), blue (B).

The display means 62 can, for example, comprise a different plurality of light emitting diodes (LEDs) for each color.

The display duty cycle 101 illustrates a constant intensity duty cycle. This allows the LEDs to be operated at a constant voltage. A duration of activation is used to affect perceived intensity of color.

A data cycle 103 is synchronized with the display duty cycle 101. The data cycle controls which pixels are activated and which are not, and if activated for how long.

FIG 3A illustrates an example of a display duty cycle 105 for the visible light 14 projected forwards 12_F towards the user 50. It can be assumed that the visible light 14 projected backwards 12_B away from the user 50 towards the selective reflector 72 has a similar duty cycle 113 (FIG 4).

In some examples, the visible light 14 can also include infrared light, visible to common type of imaging/light sensors, but not to the human eye. The sequential display of different colors can for example comprise of red (R), green (G), blue (B), infrared (IR).

FIG 4 illustrates the effect of non-selective reflection. FIG 4 illustrates the duty cycle 113 of light 14 after it has been reflected. This duty cycle 113 will be combined with the duty cycle 105 of light projected towards the user 50. The duty cycle 115 is a combined duty cycle that is perceived by the user 50. The combined duty cycle 115 combines (adds) the duty cycle 105 of light 14 that is projected forwards 12_F towards the user 50 and the duty cycle 113 of light that is selectively reflected towards the user 50. In this example, there is no selective attenuation 111.

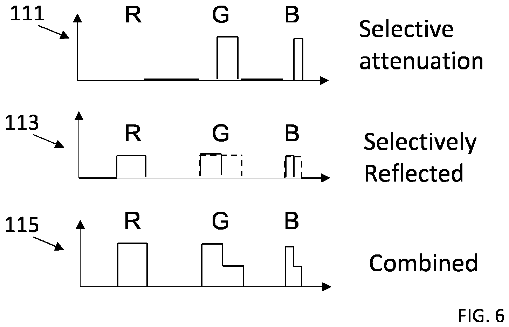

FIGs 5 and 6 illustrate different examples of selective reflection. Each of FIGs 5 and 6 illustrates the effects of selective attenuation 111 provided by a filter 78 to the reflected light 14. The selective attenuation can be controlled to be different in attenuation level for each of the different colors R, G, B.

The FIGs illustrate the duty cycle 113 of light 14 after it has been selectively reflected. This duty cycle 113 will be combined with the duty cycle 105 of light projected towards the user 50. The effect of the selective attenuation 111 can be seen by a comparison between the towards duty cycle 105 of light 14 that is projected forwards 12_F towards the user 50 and the duty cycle 113 of light that is selectively reflected towards the user 50.

The duty cycle 115 is a combined duty cycle that combines (adds) the duty cycle 105 of light 14 that is projected forwards 12_F towards the user 50 and the duty cycle 113 of light that is selectively reflected towards the user 50.

Due to high refresh rate, the user 50 would not notice the individual peaks but rather an averaged brightness level, not shown in the illustration.

In this example, the color space and white point can be adjusted by adjusting the selectivity of light recycling.

The Filter 78 has various states of duty cycle adjustment:
(i) passing a controlled proportion of certain wavelengths of the incident light for the duration of a time period (see FIG 5);
(ii) passing certain wavelengths of the incident light for the duration of a controlled time period (see FIG 6);
(ii) Performing (i) and (ii) passing a controlled proportion of certain wavelengths of the incident light for the duration of a controlled time period;

Referring to FIG 5, the reflected light 113 has the same duration as the equivalent non-reflected light 105. The filter 78 partially attenuates the reflected light 113 in the same way for that duration.

Referring to FIG 6, the reflected light 113 has the different duration than a duration of the equivalent non-reflected light 105. The filter 78 fully attenuates the reflected light 113 for only a portion the duration of the non-reflected light.

In some example, the reflected light 113 has a controlled profile for a controlled duration. The filter 78 variably attenuates the reflected light 113 for the duration of the equivalent non-reflected light.

In at least some examples, the filter 78 is a tunable wavelength selective color filter. In this example, the filter 78 properties can be adjusted based on the properties of the EPE, ambient illumination conditions and/or situational awareness. This can be achieved using calibration to compensate for possible non-uniformities of the EPE. e.g. each EPE is characterized (optical properties measured) as a part of the manufacturing process, and related data is used as a baseline for the calibration of the tunable filter 78. Ambient illumination conditions can be measured using ambient illumination sensors or camera(s) and filter transmissivity per wavelength can be adjusted according to the result. For the situations where some important information is presented to the user 50 or where there is a risk the user 50 does not pay enough attention to the important information shown on the HUD, selected wavelengths can be emphasized by adjusting filter transmissivity. This feature can be based on user 50 monitoring and sensing the exterior environment of a vehicle.

The control can be sequential, as is presented in all the supplied examples, and/or spatial, where different regions of the filter 78 control light passage in different ways. Thus the filter 78 can be configured to adjust a duty cycle per color sequentially. Additionally, or alternatively, the filter 78 can be configured to adjust spatially nonuniformity.

In at least some examples, the PGU 80 is a projector with sequential RGB color channels and is synchronized with the tunable filter 78 so that the combined effect may be used for white point adjustment.

PGU illumination duty cycle 101 uses sequential color fields with controllable variable length color fields. Field/frame rate can be set to very high so that motion or color artefacts are not observed.

PGU data cycle 103 control what data for each of the color fields is rendered on the display separately. A synchronizing signal is used in order to maintain alignment of the displayed data and illumination source duty cycle 101.

In some but not necessarily all examples, the apparatus 10 comprises one or more sensor 30 as illustrated in FIGs 1 and 2, for example.

For example, the apparatus 10 can comprise one or more sensors for detecting ambient illumination levels and ambient color temperature and the selectivity of the dynamically controllable reflector 72 can then be dependent upon (based on) output from the one or more sensors 30 of ambient illumination.

For example, the characteristics of the filter 78 can be adjusted in dependence upon output from the one or more sensors 30 of ambient illumination. The color temperature of the environment may change, and the apparatus 10 can control the dynamically controllable reflector 72 to prevent eye strain in changing conditions by, for example, adjusting the white point of a displayed image. The change in color temperature can, for example, occur gradually throughout the day or suddenly, for example, when driving into a tunnel where artificial illumination may have a different spectrum than sunlight.

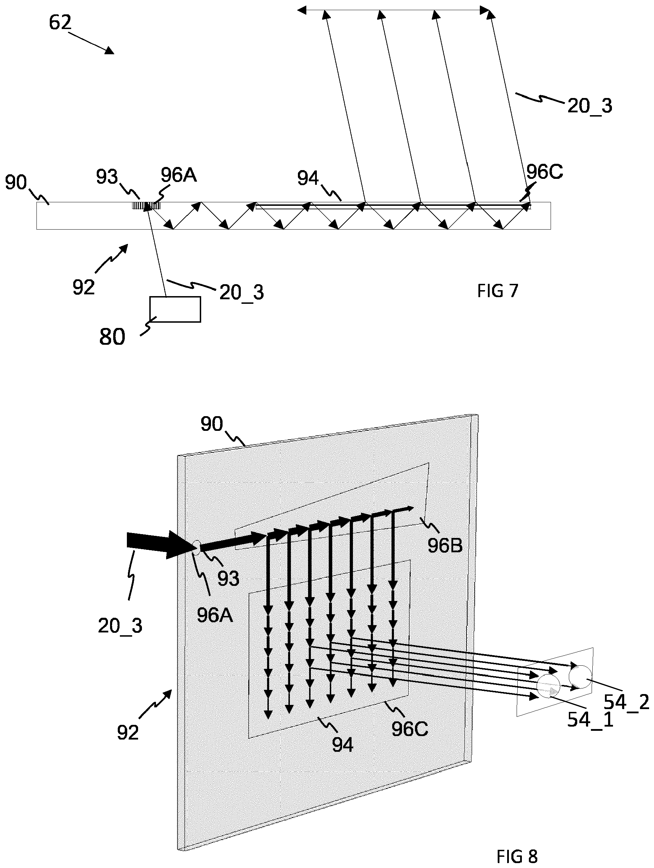

FIG 7 illustrates an example of a light guide display comprising a light guide 90. The light guide 90 in this example, but not necessarily all examples, comprises in-coupling diffractive means 93 for receiving input light defining the image 20_3 and out-coupling diffractive means 94 configured to out-couple light defining the image 10_3.

In some examples, a diffraction element 96A is used to provide the in-coupling diffractive means 93 and a diffraction element 96C is used to provide the out-coupling diffractive means 94.

The light guide 90 can be configured as an exit pupil expander 92 with an increased number of acceptable viewing positions for a user 50.

An example of a two-dimensional exit pupil expander is illustrated in FIG 8 (and FIG 9). FIG 8 is a perspective view. FIG 9 comprises three distinct views: (i) a top plan view, (ii) a first side view that defines a first dimension and (iii) a second side view that defines a second dimension.

The exit pupil expander 92 comprises in-coupling diffractive means 93 configured to in-couple one or more input beams of light into the light guide 90, expanding means 96B configured to expand the one or more input beams of light, and out-coupling diffractive means 94 configured to out-couple the one or more expanded beams of light from the light guide 90. A diffraction element 96A provides the in-coupling diffractive means 93 and a diffraction element 96C provides the out-coupling diffractive means 94. The expanding means 96B can, in at least some examples, be a diffraction element.

Examples of diffraction elements include but are not limited to diffraction gratings and other periodic structures.

A pupil is a virtual aperture. The input pupil is expanded (increased, multiplied) to form the larger exit pupil. In the example illustrated the exit pupil is expanded in two different dimensions.

In general, 2D exit pupil expanders use diffractive optics. However, a 1D exit pupil expander can use refracting optics, with slanted mirror surfaces (or prisms) inside the light guide 90. 2D expansion with refractive optics is possible but more difficult.

The light guide 90 could comprise a stack of multiple light guides, or partially overlapping light guides 90, or adjacent light guides 90. The term 'light guide' should be construed accordingly. In some examples, the light guide 90 is a single unitary light guide configured to operate at a narrow band of wavelengths.

Glare or stray light in the examples may be caused by reflections on different surfaces, unwanted diffractions (e.g., of higher order) on the diffraction gratings, or some other comparable causes. Means for reducing such effects could be used. Examples include but are not limited to anti-reflection coatings of different surfaces, and special diffraction grating solutions.

The apparatus 10 can comprise additional optical elements that are not described such as, for example, Fresnel lenses for distorting the image from the light guide 90, additional lenses for compensating the distortion originating from the reflection of the windshield combiner 10.

In the above examples, an exit pupil expander (EPE) head-up display (HUD) can consist of a standard EPE solution based on a PGU projector 80 and a diffractive light guide 90 with incoupler 96A, expander 96B, and outcoupler 96C gratings. Other types of EPE layouts are equally possible.

The displayed virtual image 20_3 (see FIG 10) can be focused to infinity (using a flat light guide 90), or to a finite distance (using e.g., a spherical light guide 90 or a flat light guide 90 with additional lenses), or have multiple focal planes (using e.g., a stack of spherical light guides 90).

Only one EPE plate 90 is shown in all the examples and it could be enough for achieving full colors, decent exit pupil / eyebox size, and eye relief / viewing distance from the EPE HUD system. Nonetheless, the apparatus 10 can also use multiple EPE elements for multiplexing colors, the focal distance, the FOV, the exit pupil, or some other features.

Adjustment of the exit pupil position might be needed in order to compensate for user size or position. The adjustment could be of mechanical type (e.g., tilting.) or of some other type, automatic or manual, and could be synced with the vehicles seat, HUD, steering wheel, or some other adjustment available in a vehicle.

The above-described apparatus 10 can be used as a head-mounted display (HMD) or as a head-up display (HUD). The apparatus can be an exit pupil expander (EPE) head up display, optionally a vehicle head up display. The white point of an EPE HUD can be adjusted and the HUD calibrated for color accuracy.

The above-described apparatus 10 can be comprised in a module, a device, a vehicle or cab for a vehicle.

The above-described solutions can be used in augmented reality (AR) headsets and avionic and automotive head up display (HUD) systems. Automotive EPE HUD requires large light guides, possibly 400 mm wide or wider. Manufacturing of such large light guides is costly and it is highly desirable to include only one light guide to produce the full RGB color gamut, instead of two or more light guides in a typical stacked EPE structure. The problem with having only one light guide however is related to the design optimization. It becomes very challenging to achieve high efficiency and uniformity for a wide wavelength band. Typically, diffraction grating optimization can only be done for a certain wavelength, not for the full RGB spectrum. The solutions described enable the use of less light guides (for example only one EPE) to produce the full color gamut.

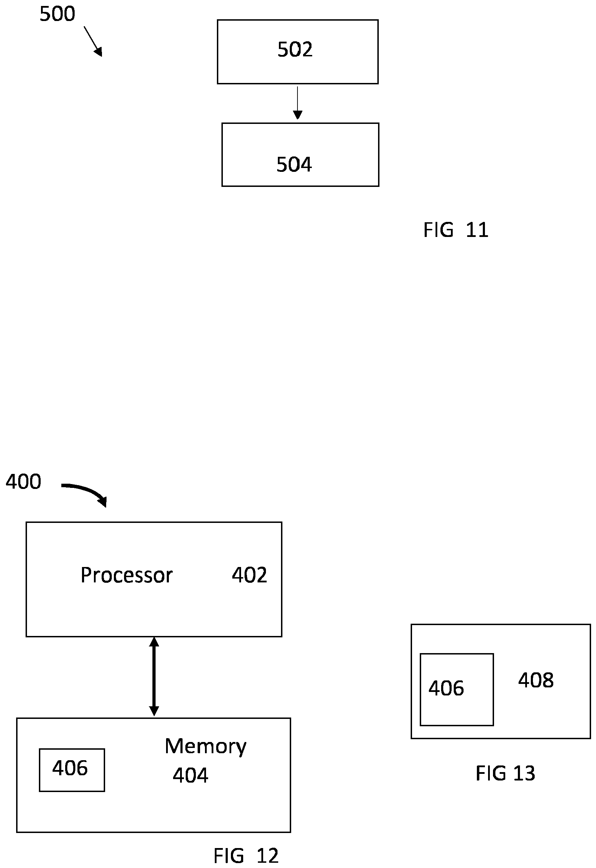

FIG 11 illustrates an example of a method 500 for projecting light 14, forming an image, towards a user 50.

The method comprises, at block 504, dynamically controlling selectivity of reflection by a reflector to selectively reflect light outcoupled from an exit pupil expander, the reflection reflecting light towards a user.

In some but not necessarily all example, this may in dependence upon detection of ambient illumination at block 502.

As illustrated in Fig 12 a controller 400 may be implemented using instructions that enable hardware functionality, for example, by using executable instructions of a computer program 406 in a general-purpose or special-purpose processor 402 that may be stored on a computer readable storage medium (disk, memory etc) to be executed by such a processor 402.

Fig 12 illustrates an example of a controller 400 suitable for use in an apparatus 10. Implementation of a controller 400 may be as controller circuitry. The controller 400 may be implemented in hardware alone, have certain aspects in software including firmware alone or can be a combination of hardware and software (including firmware).

The processor 402 is configured to read from and write to the memory 404. The processor 402 may also comprise an output interface via which data and/or commands are output by the processor 402 and an input interface via which data and/or commands are input to the processor 402.

The memory 404 stores a computer program 406 comprising computer program instructions (computer program code) that controls the operation of the apparatus 10 when loaded into the processor 402. The computer program instructions, of the computer program 406, provide the logic and routines that enables the apparatus to perform the methods illustrated in the accompanying Figs. The processor 402 by reading the memory 404 is able to load and execute the computer program 406.

The apparatus 10 comprises:
at least one processor 402; and
at least one memory 404 including computer program code
the at least one memory 404 and the computer program code configured to, with the at least one processor 402, cause the apparatus 10 at least to perform:
   dynamically controlling selectivity of reflection by a reflector to selectively reflect light outcoupled from an exit pupil expander, the reflection reflecting light towards a user.

The apparatus 10 comprises:
at least one processor 402; and
   at least one memory 404 including computer program code,
the at least one memory storing instructions that, when executed by the at least one processor 402, cause the apparatus at least to:
dynamically controlling selectivity of reflection by a reflector to selectively reflect light outcoupled from an exit pupil expander, the reflection reflecting light towards a user.

As illustrated in Fig 13, the computer program 406 may arrive at the apparatus 10 via any suitable delivery mechanism 408. The delivery mechanism 408 may be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid-state memory, an article of manufacture that comprises or tangibly embodies the computer program 406. The delivery mechanism may be a signal configured to reliably transfer the computer program 406. The apparatus 10 may propagate or transmit the computer program 406 as a computer data signal.

Computer program instructions for causing an apparatus to perform at least the following or for performing at least the following:
dynamically controlling selectivity of reflection by a reflector to selectively reflect light outcoupled from an exit pupil expander, the reflection reflecting light towards a user.

The computer program instructions may be comprised in a computer program, a non-transitory computer readable medium, a computer program product, a machine readable medium. In some but not necessarily all examples, the computer program instructions may be distributed over more than one computer program.

Although the memory 404 is illustrated as a single component/circuitry it may be implemented as one or more separate components/circuitry some or all of which may be integrated/removable and/or may provide permanent/semi-permanent/ dynamic/cached storage.

Although the processor 402 is illustrated as a single component/circuitry it may be implemented as one or more separate components/circuitry some or all of which may be integrated/removable. The processor 402 may be a single core or multi-core processor.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' may refer to one or more or all of the following:
(a) hardware-only circuitry implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory or memories that work together to cause an apparatus, such as a mobile phone or server, to perform various functions and
(c) hardware circuit(s) and or processor(s), such as a microprocessor(s) or a portion of a microprocessor(s), that requires software (for example, firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

The blocks illustrated in the accompanying Figs may represent steps in a method and/or sections of code in the computer program 406. The illustration of a particular order to the blocks does not necessarily imply that there is a required or preferred order for the blocks and the order and arrangement of the block may be varied. Furthermore, it may be possible for some blocks to be omitted.

Where a structural feature has been described, it may be replaced by means for performing one or more of the functions of the structural feature whether that function or those functions are explicitly or implicitly described.

As used here 'module' refers to a unit or apparatus that excludes certain parts/components that would be added by an end manufacturer or a user.

The apparatus 10 can be a module. It can also be a system.

The above-described examples find application as enabling components of:
automotive systems; telecommunication systems; electronic systems including consumer electronic products; distributed computing systems; media systems for generating or rendering media content including audio, visual and audio visual content and mixed, mediated, virtual and/or augmented reality; personal systems including personal health systems or personal fitness systems; navigation systems; user interfaces also known as human machine interfaces; networks including cellular, non-cellular, and optical networks; ad-hoc networks; the internet; the internet of things; virtualized networks; and related software and services.

The apparatus can be provided in an electronic device, for example, a mobile terminal, according to an example of the present disclosure. It should be understood, however, that a mobile terminal is merely illustrative of an electronic device that would benefit from examples of implementations of the present disclosure and, therefore, should not be taken to limit the scope of the present disclosure to the same. While in certain implementation examples, the apparatus can be provided in a mobile terminal, other types of electronic devices, such as, but not limited to: mobile communication devices, hand portable electronic devices, wearable computing devices, portable digital assistants (PDAs), pagers, mobile computers, desktop computers, televisions, gaming devices, laptop computers, cameras, video recorders, GPS devices and other types of electronic systems, can readily employ examples of the present disclosure. Furthermore, devices can readily employ examples of the present disclosure regardless of their intent to provide mobility.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one..." or by using "consisting".

In this description, the wording 'connects', 'couple' and 'communication' and their derivatives mean operationally connected/coupled/in communication. It should be appreciated that any number or combination of intervening components can exist (including no intervening components), i.e., so as to provide direct or indirect connection/coupling/communication. Any such intervening components can include hardware and/or software components.

As used herein, the term "determine/determining" (and grammatical variants thereof) can include, not least: calculating, computing, processing, deriving, measuring, investigating, identifying, looking up (for example, looking up in a table, a database or another data structure), ascertaining and the like. Also, "determining" can include receiving (for example, receiving information), accessing (for example, accessing data in a memory), obtaining and the like. Also, " determine/determining" can include resolving, selecting, choosing, establishing, and the like.

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

Although features have been described with reference to certain examples, those features may also be present in other examples whether described or not.

The term 'a', 'an' or 'the' is used in this document with an inclusive not an exclusive meaning. That is any reference to X comprising a/an/the Y indicates that X may comprise only one Y or may comprise more than one Y unless the context clearly indicates the contrary. If it is intended to use 'a', 'an' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

## Claims

1. An apparatus comprising:
display means comprising an exit pupil expander comprising an outcoupling element configured to outcouple light in a forward direction towards a user and also in a backward direction away from the user;
a dynamically controllable reflector configured to provide selective reflection for light outcoupled from the exit pupil expander, wherein the selectivity of reflection of the light is dynamically controllable and wherein the selective reflection of the light is in a direction back towards the user.

2. An apparatus as claimed in claim 1, wherein the dynamically controllable reflector is configured to adjust a ratio of intensities of different colors present in light incident on the dynamically controllable reflector from the exit pupil expander to provide the selectively reflected light towards the user.

3. An apparatus as claimed in claim 1 or 2, configured to adjust a color temperature or white point for the light provided by the dynamically controllable reflector to the user.

4. An apparatus as claimed in any preceding claim, wherein the selectivity of the dynamically controllable reflector is dependent upon output from one or more sensors of ambient illumination.

5. An apparatus as claimed in any preceding claim, wherein the dynamically controllable reflector is a color-controllable reflector configured to differentially reflect light, of different colors, outcoupled from the exit pupil expander in the backward direction back towards the user, wherein the color- controllable reflector is configured to reflect light of a first color more than light of a second color.

6. An apparatus as claimed in any preceding claim, wherein the dynamically controllable reflector comprises a reflective surface and a color filter.

7. An apparatus as claimed in claim 6, wherein the color filter is a tunable wavelength selective color filter.

8. An apparatus as claimed in claim 7, wherein the color filter is configured to adjust a duty cycle per color sequentially.

9. An apparatus as claimed in any preceding claim, wherein the color filter is configured to be spatially non-homogenous.

10. An apparatus as claimed in any preceding claim, wherein the exit pupil expander comprises:
an in-coupler diffraction element, an expander element, an out-coupler diffraction element and the dynamically controllable reflector is positioned adjacent the out-coupler diffraction element.

11. An apparatus as claimed in any preceding claim configured as an exit pupil expander (EPE) head up display, optionally a vehicle heads up display.

12. A computer program comprising computer program instructions that when loaded into at least one processor causes:
dynamically controlling selectivity of reflection by a reflector to selectively reflect light outcoupled from an exit pupil expander, the reflection reflecting light towards a user.

13. A computer program as claimed in claim 12, configured to adjust a ratio of intensities of different colors present in light incident on the dynamically controllable reflector from the exit pupil expander to provide the selectively reflected light towards the user.

14. A method comprising:
dynamically controlling selectivity of reflection by a reflector to selectively reflect light outcoupled from an exit pupil expander, the reflection reflecting light towards a user.

15. A method as claimed in claim 14, comprising adjusting a ratio of intensities of different colors present in light incident on the dynamically controllable reflector from the exit pupil expander to provide selectively reflected light towards the user.
